# EUROPÄISCHE PATENTSCHRIFT

(11) **EP 2 815 095 B1**
(45) Veröffentlichungstag und Bekanntmachung des Hinweises auf die Patenterteilung: **11.04.2018**
(21) Anmeldenummer: 13706917.5
(22) Anmeldetag: 14.02.2013
(51) Int. Cl.: F02B 23/10

(54) **VERBRENNUNGSKRAFTMASCHINE, INSBESONDERE FÜR EINEN KRAFTWAGEN, SOWIE VERFAHREN ZUM BETREIBEN EINER SOLCHEN VERBRENNUNGSKRAFTMASCHINE**
INTERNAL COMBUSTION ENGINE, IN PARTICULAR FOR A MOTOR VEHICLE, AND METHOD FOR OPERATING SUCH AN INTERNAL COMBUSTION ENGINE
MOTEUR À COMBUSTION INTERNE, EN PARTICULIER POUR UN VÉHICULE AUTOMOBILE,ET PROCÉDÉ DE FONCTIONNEMENT D'UN TEL MOTEUR À COMBUSTION INTERNE

(30) Priorität: 14.02.2012 DE 102012002897
(43) Veröffentlichungstag der Anmeldung: 24.12.2014
(73) Patentinhaber: Daimler AG, 70327 Stuttgart (DE)
(72) Erfinder: BEZNER, Martin, 74399 Walheim (DE); FISCHER, Jürgen, 80993 München (DE); GILDEIN, Helmut, 73650 Winterbach (DE); KADEN, Arnold, 73630 Remshalden (DE); SUNDHEIM, Dirk, 73660 Urbach (DE)
(74) Vertreter: JENSEN & SON
(86) Internationale Anmeldenummer: PCT/EP2013/000419
(87) Internationale Veröffentlichungsnummer: WO 2013/120607

(56) Entgegenhaltungen:
- EP-A2- 1 302 635
- WO-A1-02/44536
- FR-A1- 2 853 355
- JP-A- H0 681 654

## Beschreibung

Die Erfindung betrifft eine Verbrennungskraftmaschine, insbesondere für einen Kraftwagen, gemäß dem Oberbegriff von Patentanspruch 1 sowie ein Verfahren zum Betreiben einer solchen Verbrennungskraftmaschine gemäß dem Oberbegriff von Patentanspruch 10.

Die DE 199 11 023 C2 offenbart eine direkt einspritzende Otto-Brennkraftmaschine mit einem von einer Wandung der Brennkraftmaschine begrenzten Brennraum und mit einem dem Brennraum zugeordneten Injektor. Der Injektor dient zum Einbringen von Kraftstoff in den Brennraum und ist in einer Aufnahmeöffnung zumindest teilweise aufgenommen. Die Aufnahmeöffnung ist dabei durch einen zumindest im Wesentlichen parallel zur axialen Richtung des Injektors verlaufenden Wandungsbereich der Wandung begrenzt. Der Injektor weist wenigstens eine Einspritzöffnung auf, welche über die Aufnahmeöffnung in den Brennraum mündet. Dies bedeutet, dass der Kraftstoff zum Betreiben der Verbrennungskraftmaschine über die Einspritzöffnung des Injektors und die Aufnahmeöffnung der Wandung in den Brennraum eingebracht, insbesondere eingespritzt, werden kann.

Der Injektor ist dabei zumindest im Wesentlichen in der Brennraummitte angeordnet und kann den Kraftstoff mit einem zumindest im Wesentlichen kegelförmigen Kraftstoffstrahl bzw. Kraftstoffspray in den Brennraum einspritzen. Der Injektor selbst ist so im Brennraumdach angeordnet, dass sich durch die Einspritzung in einem gewissen Abstand an einer Zündkerze ein zündfähiges Kraftstoff-Luft-Gemisch ansammelt. Hierbei handelt es sich um ein strahlgeführtes Brennverfahren.

Aus der EP 1 548 248 A2 und aus der DE 697 12 155 T2 sind Verbrennungskraftmaschinen bekannt, welche wenigstens einen von zumindest einer Wandung der Verbrennungskraftmaschine begrenzten Brennraum sowie wenigstens einen dem Brennraum zugeordneten Injektor aufweisen. Der jeweilige Injektor ist in einer Aufnahmeöffnung zumindest teilweise aufgenommen. Die Aufnahmeöffnung ist durch einen zumindest im Wesentlichen parallel zur axialen Richtung des Injektors verlaufenden, ersten Wandungsbereich begrenzt. Der Injektor weist wenigstens eine Einspritzöffnung auf, welche über die Aufnahmeöffnung in den Brennraum mündet. In Richtung des Brennraums schließt sich unmittelbar an den ersten Wandungsbereich ein schräg zur axialen Richtung verlaufender, weiterer Wandungsbereich der Wandung an. Durch den weiteren Wandungsbereich ist ein zumindest im Wesentlichen kegelförmiger, sich zum Brennraum hin erweiternder Bereich der Aufnahmeöffnung begrenzt. Ferner ist mittels des Injektors ein zumindest im Wesentlichen kegelförmiger Einspritzstrahl zum Einbringen von Kraftstoff der Verbrennungskraftmaschine in den Brennraum bewirkbar.

Die FR 2 853 355 A1 offenbart eine Verbrennungskraftmaschine mit wenigstens einem von zumindest einer Wandung der Verbrennungskraftmaschine begrenzten Brennraum und mit wenigstens einem dem Brennraum zugeordneten Injektor. Der Injektor ist in einer durch einen zumindest im Wesentlichen parallel zur axialen Richtung des Injektors verlaufenden, ersten Wandungsbereich der Wandung begrenzten Aufnahmeöffnung zumindest teilweise aufgenommen und weist wenigstens eine Einspritzöffnung auf, welche über die Aufnahmeöffnung in den Brennraum mündet. An den ersten Wandungsbereich schließt sich in Richtung des Brennraums ein schräg zur axialen Richtung verlaufender, weiterer Wandungsbereich der Wandung an, durch welchen ein zumindest im Wesentlichen kegelförmiger, sich zum Brennraum hin erweiternder Bereich der Aufnahmeöffnung begrenzt ist. Mittels des Injektors ist ein zumindest im Wesentlichen kegelförmiger Einspritzstrahl zum Einbringen von Kraftstoff der Verbrennungskraftmaschine in den Brennraum bewirkbar, wobei ein Kegelöffnungswinkel des weiteren Wandungsbereichs kleiner ist als ein Strahlwinkel des Einspritzstrahls. Zur Bildung einer Gemischwolke wird der Einspritzstrahl gegen den weiteren Wandungsbereich gespritzt.

Es hat sich gezeigt, dass es insbesondere bei besonders geringen Mengen von mittels des Injektors eingespritztem Kraftstoff zu Problemen hinsichtlich der Entflammungs- und Verbrennungsstabilität insbesondere im sogenannten Schichtbetrieb der Verbrennungskraftmaschine kommen kann.

Es ist daher Aufgabe der vorliegenden Erfindung, eine Verbrennungskraftmaschine sowie ein Verfahren zum Betreiben einer solchen Verbrennungskraftmaschine der eingangs genannten Art derart weiterzuentwickeln, dass eine besonders hohe Verbrennungsstabilität realisierbar ist.

Diese Aufgabe wird durch eine Verbrennungskraftmaschine, insbesondere für einen Kraftwagen, mit den Merkmalen des Patentanspruchs 1 sowie durch ein Verfahren zum Betreiben einer solchen Verbrennungskraftmaschine mit den Merkmalen des Patentanspruchs 10 gelöst. Vorteilhafte Ausgestaltungen mit zweckmäßigen und nichttrivialen Weiterbildungen der Erfindung sind in den übrigen Ansprüchen angegeben.

Ein erster Aspekt der Erfindung betrifft eine Verbrennungskraftmaschine, insbesondere für einen Kraftwagen und insbesondere für einen Personenkraftwagen. Die Verbrennungskraftmaschine umfasst wenigstens einen von zumindest einer Wandung der Verbrennungskraftmaschine begrenzten Brennraum, beispielsweise einen Zylinder. Ferner umfasst die Verbrennungskraftmaschine wenigstens einen dem Brennraum zugeordneten Injektor, welcher in einer Aufnahmeöffnung zumindest teilweise aufgenommen ist. Die Aufnahmeöffnung ist durch einen zumindest im Wesentlichen parallel zur axialen Richtung des Injektors verlaufenden, ersten Wandungsbereich der Wandung begrenzt. Die Aufnahmeöffnung ist beispielsweise zumindest im Wesentlichen kreisrund bzw. als ein gerader Kreiszylinder ausgebildet bzw. in dieser Form durch den ersten Wandungsbereich begrenzt.

Der Injektor weist wenigstens eine Einspritzöffnung auf, welche über die Aufnahmeöffnung in den Brennraum mündet. Über die Einspritzöffnung und die Aufnahmeöffnung kann somit insbesondere flüssiger Kraftstoff der Verbrennungskraftmaschine in den Brennraum eingebracht, insbesondere eingespritzt und insbesondere direkt eingespritzt, werden.

In Richtung des Brennraums schließt sich unmittelbar an den ersten Wandungsbereich ein schräg zur axialen Richtung des Injektors verlaufender, weiterer Wandungsbereich der Wandung an. Durch den weiteren Wandungsbereich ist ein zumindest im Wesentlichen kegelförmiger, sich zum Brennraum hin erweiternder Bereich der Aufnahmeöffnung begrenzt. Ferner ist mittels des Injektors ein zumindest im Wesentlichen kegelförmiger Einspritzstrahl zum Einbringen von Kraftstoff der Verbrennungskraftmaschine in den Brennraum bewirkbar.

Erfindungsgemäß ist der weitere Wandungsbereich über seine Länge hinweg bezogen auf die radiale Richtung des Injektors von dem Injektor beabstandet und in zumindest bereichsweiser Überdeckung mit dem Injektor angeordnet. Ferner weist der weitere Wandungsbereich einen Kegelöffnungswinkel in einem Bereich von einschließlich 50° bis einschließlich 90° auf, wobei der Kegelöffnungswinkel kleiner ist als ein Strahlwinkel des Einspritzstrahls. Der Strahlwinkel charakterisiert dabei einen Kegelöffnungswinkel des zumindest im Wesentlichen kegelförmigen Einspritzstrahls und wird als Strahlwinkel bezeichnet, um ihn begrifflich besonders gut vom Kegelöffnungswinkel des weiteren Wandungsbereichs unterscheiden zu können. Des Weiteren liegt ein geringster Abstand zwischen dem weiteren Wandungsbereich und dem mittels des Injektors bewirkbaren Einspritzstrahl bei einer Einspritzung von Kraftstoff in den Brennraum in einem Bereich von einschließlich 1 mm bis einschließlich 4 mm. Dadurch werden der Einspritzstrahl und das entstehende Kraftstoff-Luft-Gemisch in seinem Ausbreitungsverhalten stabilisiert, was zu einer besonders hohen Verbrennungsstabilität und zu einer geringen Aussetzerwahrscheinlichkeit führt.

Dadurch, dass der Kegelöffnungswinkel des weiteren Wandungsbereichs geringer als der Strahlwinkel des Einspritzstrahls ist, kann eine aus der mittels des Injektors bewirkten Einspritzung von insbesondere flüssigem Kraftstoff resultierende Gemischwolke aus dem eingespritzten Kraftstoff und dem Brennraum zugeführter Luft an dem weiteren Wandungsbereich und somit am Brennraumdach des Brennraums stabilisiert werden. Mit anderen Worten ist durch diese Ausgestaltung des weiteren Wandungsbereichs eine konvergente Auslegung der Umgebung des Injektors im Brennraum geschaffen, so dass die Gemischwolke stabilisiert werden kann. Hierdurch kann eine besonders vorteilhafte und stabile Zuordnung bzw. Zuführung der Gemischwolke beispielsweise an eine dem Brennraum zugeordnete Zündkerze realisiert werden, so dass die Gemischwolke bzw. das Gemisch aus dem Kraftstoff und der Luft mittels der Zündkerze sehr gut gezündet werden und stabil verbrennen kann. So kann auch die Gefahr von Verbrennungsaussetzern, bei denen es nicht zur erwünschten Verbrennung des Kraftstoff-Luft-Gemisches im Brennraum kommt, besonders gering gehalten werden.

Infolge der entsprechend ausgestalteten Aufnahmeöffnung gelangen ein besonders zündfähiges Kraftstoff-Luft-Gemisch sowie eine besonders hohe Menge des besonders zündfähigen Kraftstoff-Luft-Gemisches an die Zündkerze. Dies ist insbesondere deswegen der Fall, da sich die Gemischwolke besonders vorteilhaft im Brennraum richtungsstabil ausbreiten kann.

Die so geschaffene hohe Verbrennungsstabilität ist besonders vorteilhaft für den sogenannten Schichtbetrieb der Verbrennungskraftmaschine, welcher mittels des Injektors durchführbar ist. Ein solcher Schichtbetrieb ermöglicht insbesondere bei der als Ottomotor ausgebildeten Verbrennungskraftmaschine die Darstellung eines sehr kraftstoff- und emissionsarmen Betriebs, stellt jedoch bestimmte Anforderungen, um eine stabile Verbrennung des Kraftstoff-Luft-Gemisches zu realisieren. Diese Anforderungen können bei der erfindungsgemäßen Verbrennungskraftmaschine besonders gut erfüllt werden.

Im Schichtbetrieb wird der Kraftstoff mittels des Injektors in beispielsweise zwei oder drei zeitlich sehr kurz aufeinanderfolgenden Einspritzungen kurz vor dem oberen Zündzeitpunkt (ZOT) in den Brennraum eingebracht. Herkömmlicherweise wird die nachfolgende Einspritzung durch die vorausgehende Einspritzung infolge der induzierten Strömung in ihrem Eindringverhalten beeinflusst und die Zuführung von zündfähigem Gemisch an die Zündkerze wird reduziert. Insbesondere bei besonders kleinen zweiten und dritten Einspritzmengen, welche für geringe Emissionswerte vorteilhaft sind, kann dadurch die Entflammungs- und Verbrennungsstabilität negativ beeinflusst werden.

Diese Problematik ist bei der erfindungsgemäßen Verbrennungskraftmaschine zumindest reduziert. Der Strömungseinfluss der Haupteinspritzung (die vorausgehende Einspritzung) auf das Kraftstoff-Luft-Gemisch der nachfolgenden Einspritzung mit demgegenüber geringerer Einspritzmenge an Kraftstoff ist besonders gering, so dass sich die Gemischwolke richtungsstabil ausbreitet. Dadurch ist mittels der erfindungsgemäßen Verbrennungskraftmaschine ein besonders vorteilhaftes strahlgeführtes Brennverfahren darstellbar, bei dem eine hohe Verbrennungsstabilität mit nur sehr geringer Aussetzerwahrscheinlichkeit im Schichtbetrieb des Ottomotors mit Direkteinspritzung und nach außen oder nach innen öffnendem Injektor in Verbindung mit Einspritzzeiten zur Darstellung besonders geringer Emissionen realisierbar ist.

In weiterer besonders vorteilhafter Ausgestaltung der Erfindung erstreckt sich der weitere Wandungsbereich bezogen auf die axiale Richtung des Injektors über eine Länge, die in einem Bereich von einschließlich 3 mm bis einschließlich 6 mm liegt. Dadurch sind besonders vorteilhafte Strömungsbedingungen realisierbar, welche zu einer besonders hohen Verbrennungsstabilität und damit zu einer geringen Aussetzerwahrscheinlichkeit führen.

Als besonders vorteilhaft hat es sich gezeigt, wenn der erste Wandungsbereich zumindest mittelbar an dem Injektor anliegt. So ist der Injektor besonders definiert in der Aufnahmeöffnung aufgenommen und gehalten und kann sich auch bei sehr hohen Einspritzdrücken nicht unerwünschterweise relativ zur Wandung bewegen.

In weiterer Ausgestaltung der Erfindung ist die Verbrennungskraftmaschine als Ottomotor ausgebildet. Insbesondere bei Ottomotoren spielt die Stabilisierung der Gemischwolke eine wichtige Rolle, um hohe Mengen an zündfähigem Gemisch zur Zündkerze führen zu können und in der Folge einen effizienten und emissionsarmen Betrieb realisieren sowie die Gefahr von Verbrennungsaussetzern gering halten zu können.

In weiterer Ausgestaltung der Erfindung ist mittels des Injektors ein Schichtbetrieb und/oder ein Homogenbetrieb der Verbrennungskraftmaschine durchführbar. Hierdurch können sowohl die Emissionen als auch der Kraftstoffverbrauch der Verbrennungskraftmaschine besonders gering gehalten werden.

Als besonders vorteilhaft hat es sich gezeigt, wenn eine außenumfangsseitige Mantelfläche des Injektors, welche zumindest im Wesentlichen in Form eines geraden Kreiszylinders ausgebildet ist, und der erste Wandungsbereich zum Brennraum hin auf einer gemeinsamen Höhe enden. Mit anderen Worten erstrecken sich der erste Wandungsbereich und die außenumfangsseitige Mantelfläche des Injektors zum Brennraum hin bis auf eine gemeinsame Höhe. Hierdurch sind besonders vorteilhafte Umgebungsbedingungen geschaffen, so dass die aus der Einspritzung des Kraftstoffs resultierende Gemischwolke sehr gut stabilisiert werden kann.

Bei einer weiteren Ausführungsform der Erfindung ist der Injektor als außen öffnender oder innen öffnender Injektor ausgebildet. Hierdurch kann eine besonders hohe Verbrennungsstabilität realisiert werden.

Schließlich hat es sich als besonders vorteilhaft gezeigt, wenn der weitere Wandungsbereich rotationssymmetrisch zu einer Mittelachse des Injektors ausgebildet ist. Der Wandungsbereich kann somit zeit- und kostengünstig gefertigt werden.

Vorteilhafterweise ist der Injektor zumindest im Wesentlichen mittig zum Brennraum angeordnet. Mit anderen Worten fallen die Mittelachse des Injektors und eine Mittelachse des Brennraums zusammen. Dies bedeutet, dass die Mittelachsen deckungsgleich sind.

Ein zweiter Aspekt der Erfindung betrifft ein Verfahren zum Betreiben einer Verbrennungskraftmaschine, insbesondere einer erfindungsgemäßen Verbrennungskraftmaschine. Die Verbrennungskraftmaschine weist wenigstens einen von zumindest einer Wandung der Verbrennungskraftmaschine begrenzten Brennraum und wenigstens einen dem Brennraum zugeordneten Injektor auf, welcher in einer durch einen zumindest im Wesentlichen parallel zur axialen Richtung des Injektors verlaufenden Wandungsbereich der Wandung begrenzten Aufnahmeöffnung zumindest teilweise aufgenommen ist.

Der Injektor weist wenigstens eine Einspritzöffnung auf, welche über die Aufnahmeöffnung in den Brennraum mündet, wobei sich in Richtung des Brennraums unmittelbar an den ersten Wandungsbereich ein schräg zur axialen Richtung verlaufender, weiterer Wandungsbereich der Wandung anschließt. Durch den weiteren Wandungsbereich ist ein zumindest im Wesentlichen kegelförmiger, sich zum Brennraum hin erweiternder Bereich der Aufnahmeöffnung begrenzt.

Im Rahmen des Verfahrens wird mittels des Injektors ein zumindest im Wesentlichen kegelförmiger Einspritzstrahl zum Einbringen von Kraftstoff der Verbrennungskraftmaschine in den Brennraum bewirkt.
Zur Realisierung einer besonders hohen Verbrennungsstabilität ist es erfindungsgemäß vorgesehen, dass der weitere Wandungsbereich über seine Länge hinweg bezogen auf die radiale Richtung des Injektors von dem Injektor beabstandet und in zumindest bereichsweiser Überdeckung mit dem Injektor angeordnet ist und einen Kegelöffnungswinkel in einem Bereich von einschließlich 50° bis einschließlich 90° aufweist, wobei der Kegelöffnungswinkel kleiner ist als ein Strahlwinkel des Einspritzstrahls und wobei die Verbrennungskraftmaschine mittels des Injektors in einem Schichtbetrieb betrieben wird und ein geringster Abstand zwischen dem weiteren Wandungsbereich und dem mittels des Injektors bewirkbaren Einspritzstrahl bei einer Einspritzung von Kraftstoff in den Brennraum in einem Bereich von einschließlich 1 mm bis einschließlich 4 mm liegt. Dadurch werden der Einspritzstrahl und das entstehende Kraftstoff-Luft-Gemisch in seinem Ausbreitungsverhalten stabilisiert, was zu einer besonders hohen Verbrennungsstabilität und zu einer geringen Aussetzerwahrscheinlichkeit führt. Vorteilhafte Ausgestaltungen des ersten Aspekts der Erfindung sind als vorteilhafte Ausgestaltungen des zweiten Aspekts der Erfindung anzusehen und umgekehrt.

Im Schichtbetrieb, welcher üblicherweise auch als Schichtbrennverfahren bezeichnet wird, kann es zu hohen Ladungsbewegungen kommen. Diese hohen Ladungsbewegungen können sich herkömmlicherweise negativ auf die Verbrennungsstabilität auswirken. Durch die entsprechende Ausgestaltung des Brennraums können diese Ladungsbewegungen nun gering gehalten werden, so dass sich eine Gemischwolke aus Kraftstoff und Luft stabil im Brennraum ausbreiten und beispielsweise zu einer Zündkerze geführt werden kann, mittels welcher die Gemischwolke dann gezündet werden kann. Handelt es sich bei der Verbrennungskraftmaschine um eine sogenannte aufgeladene Verbrennungskraftmaschine, welche wenigstens einen Abgasturbolader zum Versorgen der Verbrennungskraftmaschine mit verdichteter Luft aufweist, so führt diese Aufladung der Verbrennungskraftmaschine üblicherweise zu sehr hohen Ladungsbewegungen. Aufgrund der Ausgestaltung des Brennraums kann nun jedoch ein besonders robuster Schichtbetrieb realisiert werden, da die Bildung eines zündfähigen Gemisches an der Zündkerze gewährleistet werden kann.

Ferner ist es möglich, die Verbrennungskraftmaschine mit besonders hohen Kraftstoffdrücken beispielsweise in einem Bereich von einschließlich 150 bar bis einschließlich 300 bar zu betreiben, so dass ein besonders effizienter und somit kraftstoffverbrauchsarmer Betrieb realisierbar ist.

Vorteilhafterweise ist der Grundflächendurchmesser der zumindest im Wesentlichen kegelförmigen Aufnahmeöffnung derart gewählt, dass sich der mittels des Injektors bewirkbare Einspritzstrahl ungehindert ausbreiten kann. Mit anderen Worten ist vorgesehen, dass der zweite Wandungsbereich die Ausbreitung und Ausbildung des Einspritzstrahls nicht behindert.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

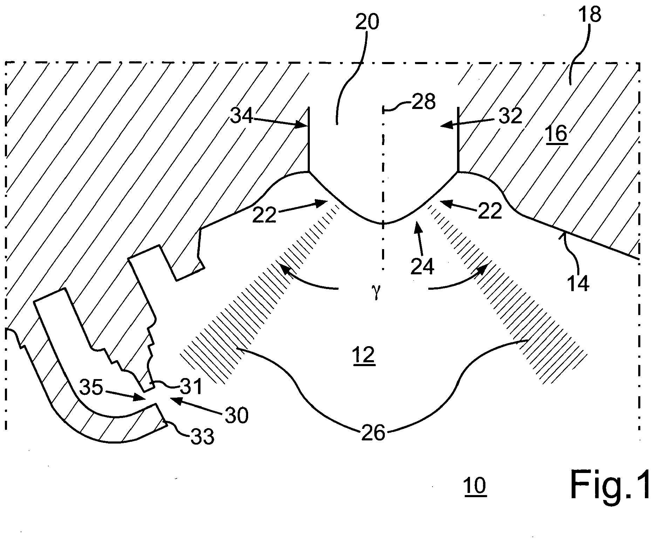

Fig. 1 dient dabei zur Erläuterung des Hintergrunds der Erfindung.

Die Zeichnung zeigt in:
- Fig. 1: ausschnittsweise eine schematische Schnittansicht einer als Hubkolben-Verbrennungskraftmaschine ausgebildeten Verbrennungskraftmaschine mit wenigstens einem von einem Brennraumdach eines Zylinderkopfes begrenzten Zylinder und mit einem dem Zylinder zugeordneten Injektor, der in einer Aufnahmeöffnung des Zylinderkopfes angeordnet ist, wobei mittels des Injektors über die Aufnahmeöffnung Kraftstoff in den Zylinder einspritzbar ist;

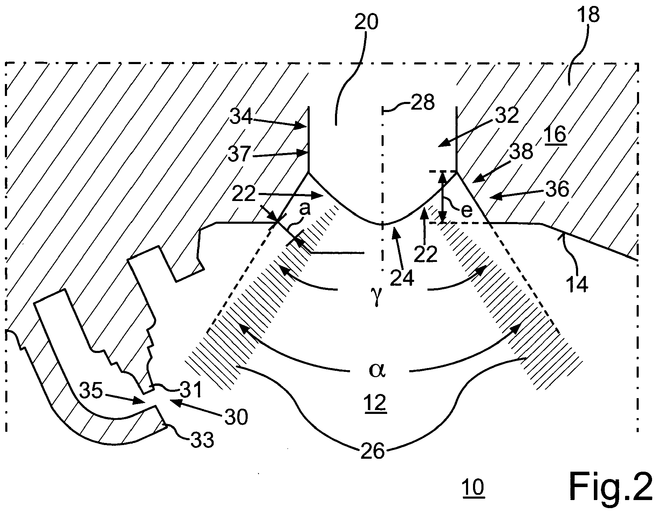

- Fig. 2: ausschnittsweise eine schematische Schnittansicht einer als Hubkolben-Verbrennungskraftmaschine ausgebildeten Verbrennungskraftmaschine gemäß einer ersten Ausführungsform, bei welcher die Aufnahmeöffnung zumindest durch einen ersten sowie durch einen sich zum Zylinder hin anschließenden, weiteren Wandungsbereich begrenzt ist wobei durch den weiteren Wandungsbereich ein zumindest im Wesentlichen kegelförmiger Bereich der Aufnahmeöffnung begrenzt ist und wobei ein Kegelöffnungswinkel des weiteren Wandungsbereichs kleiner ist als ein Strahlwinkel eines zumindest im Wesentlichen kegelförmigen und mittels des Injektors bewirkbaren Einspritzstrahls; und

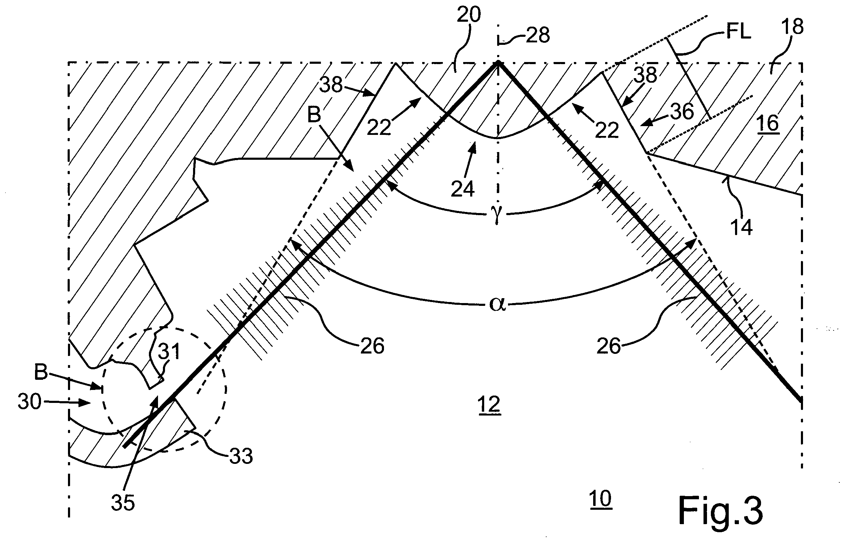

- Fig. 3: ausschnittsweise eine schematische Schnittansicht der Hubkolben-Verbrennungskraftmaschine gemäß Fig. 2 in einer zweiten Ausführungsform.

In den Figuren sind gleiche oder funktionsgleiche Elemente mit gleichen Bezugszeichen versehen.

Fig. 1 zeigt eine als Hubkolben-Verbrennungskraftmaschine ausgebildete Verbrennungskraftmaschine 10 für einen Kraftwagen, beispielsweise einen Personenkraftwagen. In Fig. 1 ist ein Brennraum 12 der Verbrennungskraftmaschine 10 zu erkennen. Dabei kann die Verbrennungskraftmaschine 10 eine Mehrzahl solcher Brennräume 12 aufweisen. Vorliegend ist der Brennraum 12 als Zylinder ausgebildet, in welchem Verbrennungsvorgänge ablaufen.

In Hochrichtung der Verbrennungskraftmaschine nach oben ist der Brennraum 12 von einem Brennraumdach 14 begrenzt. Das Brennraumdach 14 ist beispielsweise durch eine Wandung 16 eines Zylinderkopfes 18 der Verbrennungskraftmaschine 10 gebildet. Der Zylinderkopf 18 ist dabei beispielsweise mit einem Kurbelgehäuse der Verbrennungskraftmaschine 10 verbunden. An dem Kurbelgehäuse ist eine Kurbelwelle der Verbrennungskraftmaschine 10 um eine Drehachse relativ zum Kurbelgehäuse drehbar gelagert.

Seitlich ist der Brennraum 12 durch Zylinderwände begrenzt, welche in Fig. 1 nicht erkennbar sind und welche durch das als Zylinderkurbelgehäuse ausgebildete Kurbelgehäuse gebildet sind. In Hochrichtung der Verbrennungskraftmaschine 10 ist der Brennraum 12 nach unten hin durch einen Kolben der Verbrennungskraftmaschine 10 begrenzt. Der Kolben ist dabei in dem Brennraum 12 relativ zum Brennraumdach 14 translatorisch bewegbar aufgenommen und über einen Kolbenbolzen gelenkig mit einem Pleuel verbunden. Das Pleuel wiederum ist gelenkig mit einem Hubzapfen der Kurbelwelle verbunden. Über diese gelenkigen Verbindungen können translatorische Auf- und Abwärtsbewegungen des Kolbens in dem Brennraum 12 in eine rotatorische Bewegung der Kurbelwelle um ihre Drehachse umgewandelt werden.

Dem Brennraum 12 ist ein Injektor 20 zugeordnet. Üblicherweise wird der Injektor 20 auch als Einspritzventil oder als Einspritzelement bezeichnet. Mittels des Injektors 20 kann flüssiger Kraftstoff zum Betreiben der Verbrennungskraftmaschine 10 in den Brennraum 12 direkt eingespritzt werden. Dazu umfasst der Injektor 20 sehr schematisch dargestellte mindestens eine Einspritzöffnung 22 einer Einspritzdüse 24 des Injektors 20, wobei die mindestens eine Einspritzöffnung 22 in den Brennraum 12 mündet.

In Fig. 1 ist schematisch ein im Ganzen mit 26 bezeichneter Einspritzstrahl dargestellt, welcher mittels des Injektors 20 bewirkbar ist. Dies bedeutet, dass mittels des Injektors 20 flüssiger Kraftstoff unter Bildung des Einspritzstrahls 26 in den Brennraum 12 direkt einspritzbar ist. Wie Fig. 1 zu entnehmen ist, ist der mittels des Injektors 20 bewirkbare Einspritzstrahl 26 aus Kraftstoff zumindest im Wesentlichen kegelförmig ausgebildet und weist einen Strahlwinkel γ auf. Der Strahlwinkel γ rist somit ein Kegelöffnungswinkel des zumindest im Wesentlichen kegelförmigen Einspritzstrahls 26. Ferner ist in Fig. 1 eine Mittelachse 28 des Injektors 20 gezeigt. Die Mittelachse 28 fällt mit einer Mittelachse des Einspritzstrahls 26 sowie des Brennraums 12 zusammen. Mit anderen Worten sind die jeweiligen Mittelachsen des Injektors 20, des Brennraums 12 und des Einspritzstrahls 26 deckungsgleich.

Dem Brennraum 12 ist ferner eine Zündkerze 30 zugeordnet, mittels welcher ein Kraftstoff-Luft-Gemisch bzw. eine Gemischwolke aus Kraftstoff und Luft im Brennraum 12 entzündbar ist. Außer dem Kraftstoff wird dem Brennraum 12 während des Betriebs der Verbrennungskraftmaschine 10 Luft über einen Ansaugtrakt und Ansaugkanäle des Zylinderkopfes 18 zugeführt. Die Luft kann sich mit dem direkt in den Brennraum 12 mittels des Injektors 20 eingespritzten Kraftstoff vermischen und bevorzugt ein zündfähiges Kraftstoff-Luft-Gemisch bzw. die Gemischwolke bilden. Das Kraftstoff-Luft-Gemisch bzw. die Gemischwolke ist mittels der Zündkerze 30 zum Initiieren einer Verbrennung des Kraftstoff-Luft-Gemisches zündbar. Zum Zünden des Kraftstoff-Luft-Gemisches bildet sich zwischen zwei Elektroden 31, 33 der Zündkerze 30 wenigstens ein Zündfunke aus, welcher somit an einer sogenannten Zündfunkenstelle 35 gebildet wird. Bei den Einspritzöffnungen 22 des Injektors 20 handelt es sich um jeweilige, sogenannte Injektorabspritzpunkte, an denen der Kraftstoff in den Brennraum 12 eingespritzt wird.

Anhand von Fig. 1 ist es ferner ersichtlich, dass der Injektor 20 zumindest teilweise in einer Aufnahmeöffnung 32 des Zylinderkopfes 18 aufgenommen ist. Die Aufnahmeöffnung 32 ist dabei durch einen zumindest im Wesentlichen parallel zur axialen Richtung, d.h. parallel zur Mittelachse 28 des Injektors 20 verlaufenden Wandungsbereich 34 der Wandung 16 des Zylinderkopfes 18 begrenzt. Durch den Wandungsbereich 34 ist ein Bereich der Aufnahmeöffnung 32 begrenzt, welcher zumindest im Wesentlichen in Form eines geraden Kreiszylinders ausgebildet ist.

Zur Darstellung einer besonders hohen Verbrennungsstabilität und einer daraus resultierenden, besonders geringen Gefahr von Verbrennungsaussetzern der Verbrennungskraftmaschine 10 ist in Fig. 2 eine als Hubkolben-Verbrennungskraftmaschine ausgebildete Verbrennungskraftmaschine für einen Kraftwagen, insbesondere einen Personenkraftwagen, gemäß einer ersten Ausführungsform gezeigt. Wie Fig. 2 zu entnehmen ist, ist das Brennraumdach 14 in einem Bereich 36 um den Injektor 20 herum gegenüber dem Brennraumdach 14 gemäß Fig. 1 um 3 mm bis 6 mm abgesenkt. Darüber hinaus ist die Aufnahmeöffnung 32 in dem Bereich 36 zumindest im Wesentlichen kegelförmig und sich in Richtung des Brennraumdachs 14 hin erweiternd ausgebildet.

Dies ist durch einen weiteren Wandungsbereich 38 der Wandung 16 realisiert. Der weitere Wandungsbereich 38 schließt sich dabei in Richtung des Brennraums 12, d.h. zum Brennraum 12 hin unmittelbar an den ersten Wandungsbereich 34 an und erstreckt sich schräg zur axialen Richtung und damit zur Mittelachse 28 des Injektors 20. Vorliegend liegt der erste Wandungsbereich 34 direkt an dem Injektor 20 an. Der weitere Wandungsbereich 38 ist im Gegensatz dazu in radialer Richtung, d.h. quer zur Mittelachse 28, von dem Injektor 20 beabstandet und in zumindest bereichsweiser Überdeckung mit dem Injektor 20 angeordnet. Bezogen auf die axiale Richtung bzw. bezogen auf eine sich parallel zur Mittelachse 28 erstreckende Richtung erstreckt sich der weitere Wandungsbereich 38 in einem Bereich von einschließlich 3 mm bis einschließlich 6 mm in Richtung des Brennraums 12, wobei diese Erstreckung als Länge e des weiteren Wandungsbereichs 38 bezeichnet ist.

Der weitere Wandungsbereich 38 weist einen Kegelöffnungswinkel α auf, welcher in einem Bereich von einschließlich 50° bis einschließlich 90° liegt. Außerdem liegt ein minimaler Abstand a zwischen dem weiteren Wandungsbereich 38 und dem Einspritzstrahl 26 in einem Bereich von einschließlich 1 mm bis einschließlich 4 mm.

In Fig. 2 ist ferner erkennbar, dass der Injektor 20 eine außenumfangsseitige Mantelfläche 37 aufweist, welche zumindest im Wesentlichen in Form eines geraden Kreiszylinders ausgebildet ist. Diese zumindest im Wesentlichen in Form eines geraden Kreiszylinders ausgebildete, außenumfangsseitige Mantelfläche 37 ist dabei in radialer Richtung des Injektors 20 in Überdeckung mit dem ersten Wandungsbereich 34 angeordnet. Der erste Wandungsbereich 34 endet dabei am Ende der zumindest im Wesentlichen zylinderförmigen, außenumfangsseitigen Mantelfläche 37. Mit anderen Worten sind die außenumfangsseitige Mantelfläche 37 und der erste Wandungsbereich 34 zum Brennraum 12 hin auf gemeinsamer Höhe angeordnet. Dies bedeutet, dass die außenumfangsseitige Mantelfläche 37 und der erste Wandungsbereich 34 in axialer Richtung des Injektors 20 zum Brennraum 12 hin auf gemeinsamer Höhe enden.

Wie aus Fig. 2 ferner zu erkennen ist, weist der Einspritzstrahl 26 eine sogenannte Hohlkegelstrahlcharakteristik auf. Dies bedeutet, dass der Einspritzstrahl 26 zumindest im Wesentlichen in Form eines Hohlkegels ausgebildet ist. Dies ist beispielsweise dadurch realisierbar, dass bei innen öffnenden Injektoren die Einspritzöffnungen 22 der Einspritzdüse 24 voneinander beabstandet und auf jeweiligen, voneinander weg weisenden Seiten des Injektors 20 angeordnet sind, so dass über die Einspritzöffnungen 22 jeweilige Einspritzstrahlteile derart eingespritzt werden, dass sich ein Hohlkegel als der Einspritzstrahl 26 ausbildet. Bei außen öffnenden Injektoren wird mittels einer ringförmig umlaufenden, freigebbaren Einspritzöffnung 22 der Einspritzstrahl 26 als Hohlkegel abgespritzt. Vorteilhafterweise liegt der Strahlwinkel γ in einem Bereich von einschließlich 75° bis einschließlich 90°. Der Strahlwinkel γ ist somit ein Kegelöffnungswinkel des zumindest im Wesentlichen kegelförmigen bzw. hohlkegelförmigen Einspritzstrahls 26.

Wie aus Fig. 2 und besonders gut aus Fig. 3 erkennbar ist, ist der Kegelöffnungswinkel α des weiteren Wandungsbereichs 38 kleiner als der Strahlwinkel γ des Einspritzstrahls 26. Dadurch neigt sich der weitere Wandungsbereich 38 dem Einspritzstrahl 26 entgegen, so dass sich der ringförmige Durchgang zwischen dem weiteren Wandungsbereich 38 und dem Hohlkegel des Einspritzstrahls 22 bzw. der Einspritzstrahlen 22 verengt, wodurch der anfänglich aus der Einspritzöffnung 22 austretende Einspritzstrahl 26 bzw. die anfänglich aus den Einspritzöffnungen 22 austretenden Einspritzstrahlen 26 von der Ladungsbewegung im Brennraum und dem Einfluss der vorangegangen Einspritzungen abgeschirmt sind. Hierdurch kann die Gemischwolke besonders gut am Brennraumdach 14 stabilisiert werden, so dass sich eine besonders hohe Menge an zündfähigem Gemisch zur Zündkerze 30 ausbreiten kann. Mit anderen Worten ist durch diese Gestaltung des Brennraumdachs 14 eine Strömungsführung des Einspritzstrahls 26 geschaffen, so dass ein Strömungseinfluss einer Haupteinspritzung oder einen vorangegangen Einspritzung von Kraftstoff in den Brennraum 12 auf das Gemisch einer nachfolgenden Einspritzung besonders gering ist. Dadurch breitet sich die Gemischwolke richtungsstabil aus, wodurch ein besonders hoher Anteil an zündfähigem Kraftstoff-Luft-Gemisch an die Zündkerze 30 gelangt und gezündet werden kann.

Dies ist insbesondere vorteilhaft in einem sogenannten Schichtbetrieb der Verbrennungskraftmaschine 10 mit einer Mehrzahl, d.h. wenigstens zwei aufeinanderfolgenden Einspritzungen von Kraftstoff mit nur sehr geringen Kraftstoffmengen. Dadurch kann die beispielsweise als Ottomotor ausgebildete Verbrennungskraftmaschine 10 besonders emissionsarm und mit einem nur sehr geringen Kraftstoffverbrauch betrieben werden bei gleichzeitiger Realisierung einer hohen Verbrennungs- und Laufstabilität der Verbrennungskraftmaschine 10.

Fig. 3 zeigt die Verbrennungskraftmaschine 10 gemäß Fig. 2 in einer zweiten Ausführungsform. Aus Fig. 3 ist in Bereichen B besonders gut die Stabilisierung der Gemischwolke durch die entsprechende Ausgestaltung des Brennraumdachs 14 erkennbar. Durch die entsprechende Gestaltung des Brennraumdachs 14 ist eine konvergente Auslegung der Injektorumgebung geschaffen, da der Strahlwinkel zu welcher auch als Spraywinkel bezeichnet wird, größer als ein Brennraumdachwinkel in Form des Kegelöffnungswinkels α ist. In Fig. 3 ist mit FL eine sogenannte Führungslänge des weiteren Wandungsbereichs 38 bezeichnet. Vorzugsweise liegt ein Verhältnis von der Führungslänge FL zu einem Abstand zwischen einem der oben genannten Injektorabspritzpunkte und der Zündfunkenstelle 35 in einem Bereich von einschließlich 0,2 bis einschließlich 0,35.

Durch die entsprechende Ausgestaltung des Brennraumdachs 14 kann sich die Gemischwolke besonders stabil ausbreiten, so dass ein besonders ausgeprägter Schichtladebetrieb realisierbar ist. Hierbei können Mehrfacheinspritzungen von Kraftstoff mittels des Injektors 20 bewirkt werden. Dabei werden beispielsweise zwei bis fünf Einspritzungen mit Pausenzeiten in einem Bereich von 100 bis 1.000 µs durchgeführt. Mit anderen Worten erfolgt zwischen zwei aufeinanderfolgenden Einspritzungen eine Pause, welche in einem Bereich von 100 bis 1.000 µs beträgt.

Darüber hinaus ist der weitere Wandungsbereich 38 zumindest im Wesentlichen rotationssymmetrisch zur Mittelachse 28 ausgebildet und kann so auf einfache und kostengünstige Weise hergestellt werden. Des Weiteren ist der Injektor 20 zumindest im Wesentlichen mittig zum Brennraum 12 angebracht. Dies bedeutet, dass die jeweiligen Mittelachsen des Brennraums 12 und des Injektors 20 zumindest im Wesentlichen deckungsgleich zueinander sind. Es ist auch denkbar den Injektor 20 mit seiner Mittelachse 28 gegen die Mittelachse des Brennraums 12 zu neigen, sofern die Mittelachsen des Brennraums 12, des Einspritzstrahls 26 und der Wandung 38 im Wesentlichen deckungsgleich sind.

## Patentansprüche

1. Verbrennungskraftmaschine (10), insbesondere für einen Kraftwagen, mit wenigstens einem von zumindest einer Wandung (16) der Verbrennungskraftmaschine (10) begrenzten Brennraum (12) und mit wenigstens einem dem Brennraum (12) zugeordneten Injektor (20), welcher in einer durch einen zumindest im Wesentlichen parallel zur axialen Richtung des Injektors (20) verlaufenden, ersten Wandungsbereich (34) der Wandung (16) begrenzten Aufnahmeöffnung (32) zumindest teilweise aufgenommen ist und wenigstens eine Einspritzöffnung (22) aufweist, welche über die Aufnahmeöffnung (32) in den Brennraum (12) mündet, wobei sich in Richtung des Brennraums (12) unmittelbar an den ersten Wandungsbereich (34) ein schräg zur axialen Richtung verlaufender, weiterer Wandungsbereich (38) der Wandung (16) anschließt, durch welchen ein zumindest im Wesentlichen kegelförmiger, sich zum Brennraum (12) hin erweiternder Bereich (36) der Aufnahmeöffnung (32) begrenzt ist und wobei mittels des Injektors (20) ein zumindest im Wesentlichen kegelförmiger Einspritzstrahl (26) zum Einbringen von Kraftstoff der Verbrennungskraftmaschine (10) in den Brennraum (20) bewirkbar ist, wobei der weitere Wandungsbereich (38) über seine Länge (e) hinweg bezogen auf die radiale Richtung des Injektors (20) von dem Injektor (20) beabstandet ist,
**dadurch gekennzeichnet, dass** der weitere Wandungsbereich (38) in zumindest bereichsweiser Überdeckung mit dem Injektor (20) angeordnet ist und einen Kegelöffnungswinkel (α) in einem Bereich von einschließlich 50 Grad bis einschließlich 90 Grad aufweist, wobei der Kegelöffnungswinkel (α) kleiner ist als ein Strahlwinkel (γ) des Einspritzstrahls (26) und ein geringster Abstand (a) zwischen dem weiteren Wandungsbereich (38) und dem mittels des Injektors (20) bewirkbaren Einspritzstrahl (26) zum Einbringen von Kraftstoff der Verbrennungskraftmaschine (10) in den Brennraum (12) in einem Bereich von einschließlich 1 Millimeter bis einschließlich 4 Millimeter liegt.

2. Verbrennungskraftmaschine (10) nach Anspruch 1,
**dadurch gekennzeichnet, dass**
sich der weitere Wandungsbereich (38) bezogen auf die axiale Richtung des Injektors (20) über eine Länge (e) in einem Bereich von einschließlich 3 Millimeter bis einschließlich 6 Millimeter erstreckt.

3. Verbrennungskraftmaschine (10) nach einem der Ansprüche 1 oder 2,
**dadurch gekennzeichnet, dass**
der erste Wandungsbereich (34) zumindest mittelbar an dem Injektor (20) anliegt.

4. Verbrennungskraftmaschine (10) nach einem der vorhergehenden Ansprüche,
**dadurch gekennzeichnet, dass**
die Verbrennungskraftmaschine (10) als Ottomotor ausgebildet ist.

5. Verbrennungskraftmaschine (10) nach einem der vorhergehenden Ansprüche,
**dadurch gekennzeichnet, dass**
mittels des Injektors (20) ein Schichtbetrieb und/oder ein Homogenbetrieb der Verbrennungskraftmaschine (10) durchführbar ist.

6. Verbrennungskraftmaschine (10) nach einem der vorhergehenden Ansprüche,
**dadurch gekennzeichnet, dass**
eine außenumfangsseitige Mantelfläche (37) des Injektors (20), welche in Form eines geraden Kreiszylinders ausgebildet ist, und der erste Wandungsbereich (24) zum Brennraum (12) hin auf gemeinsamer Höhe enden.

7. Verbrennungskraftmaschine (10) nach einem der vorhergehenden Ansprüche,
**dadurch gekennzeichnet, dass**
der Injektor (20) als außenöffnender oder innenöffnender Injektor ausgebildet ist.

8. Verbrennungskraftmaschine (10) nach einem der vorhergehenden Ansprüche,
**dadurch gekennzeichnet, dass**
der weitere Wandungsbereich (38) rotationssymmetrisch zu einer Mittelachse (28) des Injektors (20) ausgebildet ist.

9. Verfahren zum Betreiben einer Verbrennungskraftmaschine (10), insbesondere für einen Kraftwagen, mit wenigstens einem von zumindest einer Wandung (16) der Verbrennungskraftmaschine (10) begrenzten Brennraum (12) und mit wenigstens einem dem Brennraum (12) zugeordneten Injektor (20), welcher in einer durch einen zumindest im Wesentlichen parallel zur axialen Richtung des Injektors (20) verlaufenden ersten Wandungsbereich (34) der Wandung (16) begrenzten Aufnahmeöffnung (32) zumindest teilweise aufgenommen ist und wenigstens eine Einspritzöffnung (22) aufweist, welche über die Aufnahmeöffnung (32) in den Brennraum (12) mündet, wobei sich in Richtung des Brennraums (12) unmittelbar an den ersten Wandungsbereich (34) ein schräg zur axialen Richtung verlaufender, weiterer Wandungsbereich (38) der Wandung (16) anschließt, durch welchen ein zumindest im Wesentlichen kegelförmiger, sich zum Brennraum (12) hin erweiternder Bereich (36) der Aufnahmeöffnung (32) begrenzt ist und wobei mittels des Injektors (20) ein zumindest im Wesentlichen kegelförmiger Einspritzstrahl (26) zum Einbringen von Kraftstoff der Verbrennungskraftmaschine (10) in den Brennraum (12) bewirkt wird, wobei der weitere Wandungsbereich (38) über seine Länge (e) hinweg bezogen auf die radiale Richtung des Injektors (20) von dem Injektor (20) beabstandet ist,
**dadurch gekennzeichnet, dass** der weitere Wandungsbereich (38) in zumindest bereichsweiser Überdeckung mit dem Injektor (20) angeordnet ist und einen Kegelöffnungswinkel (α) in einem Bereich von einschließlich 50 Grad bis einschließlich 90 Grad aufweist, wobei der Kegelöffnungswinkel (α) kleiner ist als ein Strahlwinkel (γ) des Einspritzstrahls (26) und wobei die Verbrennungskraftmaschine (10) mittels des Injektors (20) in einem Schichtbetrieb betrieben wird und ein geringster Abstand (a) zwischen dem weiteren Wandungsbereich (38) und dem mittels des Injektors (20) bewirkbaren Einspritzstrahl (26) zum Einbringen von Kraftstoff der Verbrennungskraftmaschine (10) in den Brennraum (12) in einem Bereich von einschließlich 1 Millimeter bis einschließlich 4 Millimeter liegt.

## Claims

1. Internal combustion engine (10), in particular for a motor vehicle, comprising a combustion chamber (12) bounded by at least one wall (16) of the internal combustion engine (10) and at least one injector (20), which is assigned to the combustion chamber (12) and which is at least partially accommodated in a reception opening (32) bounded by a first wall region (34) of the wall (16), which extends at least substantially parallel to the axial direction of the injector (20), and which injector (20) has at least one injection port (22) terminating into the combustion chamber (12) via the reception opening (32), wherein the first wall region (34) is directly adjoined in the direction of the combustion chamber (12) by a further wall region (38) of the wall (16), which extends at an angle to the axial direction and by which is bounded an at least substantially conical region (36) of the reception opening (32), which widens towards the combustion chamber (12), and wherein by means of the injector (20) an at least substantially conical injection jet (26) can be produced to introduce fuel of the internal combustion engine (10) into the combustion chamber (20), the further wall region (38) being arranged at a distance from the injector (20) along its length (e) relative to the radial direction of the injector (20),
**characterised in that**
at least a section of the further wall region (38) is arranged to overlap the injector (20) and has a cone opening angle (α) in a range of 50 degrees to 90 degrees inclusive, the cone opening angle (α) being smaller than a jet angle (γ) of the injection jet (26) and a minimum distance (a) between the further wall region (38) and the injection jet (26), which can be produced by means of the injector (20) to introduce fuel of the internal combustion engine (10) into the combustion chamber (12), lies in a range of 1 millimetre to 4 millimetres inclusive.

2. Internal combustion engine (10) according to claim 1,
**characterised in that**
the further wall region (38) extends along a length (e) in a range of 3 millimetres to 6 millimetres inclusive relative to the axial direction of the injector (20).

3. Internal combustion engine (10) according to claim 1 or 2,
**characterised in that**
the first wall region (34) adjoins the injector (20) at least indirectly.

4. Internal combustion engine (10) according to any of the preceding claims,
**characterised in that**
the internal combustion engine (10) is designed as a petrol engine.

5. Internal combustion engine (10) according to any of the preceding claims,
**characterised in that**
a stratified operation and/or a homogenous operation of the internal combustion engine (10) is possible by means of the injector (20).

6. Internal combustion engine (10) according to any of the preceding claims,
**characterised in that**
a surface (37) of the outer circumference of the injector (20), which is designed in the shape of a circular cylinder, and the first wall region (24) end at a common level towards the combustion chamber (12).

7. Internal combustion engine (10) according to any of the preceding claims,
**characterised in that**
the injector (20) is designed as an outward-opening or inward-opening injector.

8. Internal combustion engine (10) according to any of the preceding claims,
**characterised in that**
the further wall region (38) is designed to be rotationally symmetric relative to a central axis (28) of the injector (20).

9. Method for operating an internal combustion engine (10), in particular for a motor vehicle, comprising a combustion chamber (12) bounded by at least one wall (16) of the internal combustion engine (10) and at least one injector (20), which is assigned to the combustion chamber (12) and which is at least partially accommodated in a reception opening (32) bounded by a first wall region (34) of the wall (16), which extends at least substantially parallel to the axial direction of the injector (20), and which injector (20) has at least one injection port (22) terminating into the combustion chamber (12) via the reception opening (32), wherein the first wall region (34) is directly adjoined in the direction of the combustion chamber (12) by a further wall region (38) of the wall (16), which extends at an angle to the axial direction and by which is bounded an at least substantially conical region (36) of the reception opening (32), which widens towards the combustion chamber (12), and wherein by means of the injector (20) an at least substantially conical injection jet (26) is produced to introduce fuel of the internal combustion engine (10) into the combustion chamber (12), the further wall region (38) being arranged at a distance from the injector (20) along its length (e) relative to the radial direction of the injector (20),
**characterised in that**
at least a section of the further wall region (38) is arranged to overlap the injector (20) and has a cone opening angle (α) in a range of 50 degrees to 90 degrees inclusive, the cone opening angle (α) being smaller than a jet angle (γ) of the injection jet (26) and wherein the internal combustion engine (1) is run in a stratified operation by means of the injector (20) and a minimum distance (a) between the further wall region (38) and the injection jet (26), which can be produced by means of the injector (20) to introduce fuel of the internal combustion engine (10) into the combustion chamber (12), lies in a range of 1 millimetre to 4 millimetres inclusive.

## Revendications

1. Moteur à combustion interne (10), en particulier pour un véhicule automobile, comprenant au moins une chambre de combustion (12) délimitée par au moins une paroi (16) du moteur à combustion interne (10) et comprenant au moins un injecteur (20) associé à la chambre de combustion (12), ledit injecteur étant logé au moins en partie dans un orifice (32) de logement délimité par au moins une première zone (34) de la paroi (16) s'étendant au moins sensiblement parallèlement à la direction axiale de l'injecteur (20), et présentant au moins un orifice (22) d'injection qui débouche dans la chambre de combustion (12) par l'intermédiaire de l'orifice (32) de logement, une autre zone (38) de la paroi (16) s'étendant obliquement à la direction axiale étant reliée dans la direction de la chambre de combustion (12) directement à la première zone (34) de paroi, par laquelle est délimitée une zone (36) au moins sensiblement conique s'élargissant vers la chambre de combustion (12) et l'injecteur (20) peut produire un jet d'injection (26) au moins sensiblement conique pour apporter le carburant du moteur à combustion interne (10) dans la chambre à combustion (20), L'autre zone (38) de paroi étant éloignée de l'injecteur (20) sur sa longueur (e) par rapport à la direction radiale de l'injecteur (20), **caractérisé en ce que** l'autre zone (38) de paroi est disposée dans au moins un recouvrement par endroits avec l'injecteur (20) et présente un angle d'ouverture conique (α) dans une zone comprise entre 50 degrés inclus et 90 degrés inclus, l'angle d'ouverture conique (α) étant inférieure à un angle de jet (y) du jet d'injection (26) et une distance (a) la plus faible entre l'autre zone (38) de paroi et le jet d'injection (26) pouvant être produit au moyen de l'injecteur (20) pour amener le carburant du moteur à combustion interne (10) dans la chambre de combustion (12) dans une zone comprise entre 1 millimètre inclus et 4 millimètres inclus.

2. Moteur à combustion interne (10) selon la revendication 1, **caractérisé en ce que** l'autre zone de paroi (38) s'étend par rapport à la direction axiale de l'injecteur (20) sur une longueur (e) dans une zone comprise entre 3 millimètres inclus et 6 millimètres inclus.

3. Moteur à combustion interne (10) selon la revendication 1 ou la revendication 2, **caractérisée en ce que** la première zone de paroi (34) se situe au moins directement sur l'injecteur (2).

4. Moteur à combustion interne (10) selon l'une quelconque des revendications précédentes, **caractérisé en ce que** le moteur à combustion interne (10) est un moteur essence.

5. Moteur à combustion interne (10) selon l'une quelconque des revendications précédentes, **caractérisé en ce qu'**au moyen de l'injecteur (20) un fonctionnement par étapes et/ou un fonctionnement homogène du moteur à combustion interne (10) peut être réalisé.

6. Moteur à combustion interne (10) selon l'une quelconque des revendications précédentes, **caractérisé en ce qu'**une surface disposée sur la périphérie extérieure (37) de l'injecteur (20) qui est conçue sous la forme d'un cylindre circulaire droit, et la zone de paroi (24) se terminent par la chambre de combustion (12) à une hauteur commune.

7. Moteur à combustion interne (10) selon l'une quelconque des revendications précédentes, **caractérisé en ce que** l'injecteur (20) est conçu sous la forme d'un injecteur s'ouvrant vers l'extérieur ou s'ouvrant vers l'intérieur.

8. Moteur à combustion interne (10) selon l'une quelconque des revendications précédentes, **caractérisé en ce que** l'autre zone de paroi (38) est conçue à symétrie de rotation par rapport à un axe central (28) de l'injecteur (20).

9. Procédé de fonctionnement d'un moteur à combustion interne (10), en particulier pour un véhicule automobile, comprenant au moins une chambre de combustion (12) délimitée par au moins une paroi (16) du moteur à combustion interne (10) et au moins un injecteur (20) associé à la chambre de combustion (12), ledit injecteur est au moins en partie logé dans un orifice de logement (32) délimité dans une première zone (34) de la paroi (16) s'étendant dans une direction au moins sensiblement parallèle à la direction axiale de l'injecteur (20) et présente au moins un orifice d'injection (22), qui débouche dans l'orifice de logement (32) de la chambre à combustion, dans la direction de la chambre à combustion (12) une autre zone (38) de la paroi (16) s'étendant obliquement par rapport à la direction axiale est reliée directement à la première zone de paroi (34), qui délimite une zone (36) de l'orifice de logement (32) au moins sensiblement conique s'élargissant vers la chambre de combustion (12) et l'injecteur (20) produit un jet d'injection (26) au moins sensiblement conique pour amener le carburant du moteur à combustion interne (10) dans la chambre de combustion (12), l'autre zone (38) de paroi étant éloignée de l'injecteur (20) sur sa longueur (e) par rapport à la direction radiale de l'injecteur (20), **caractérisé en ce que** l'autre zone (38) de paroi est recouverte à au moins certains endroits par l'injecteur et présente un angle d'ouverture conique (a) dans une zone comprise entre 50 degrés inclus et 90 degrés inclus, l'angle d'ouverture conique (α) étant inférieur à un angle d'injection (t) du jet d'injection (26) et le moteur à combustion interne (10) fonctionnant au moyen de l'injecteur dans un mode de fonctionnement par étapes et une distance (α) la plus faible entre l'autre zone (38) de paroi et le jet d'injection (26) pouvant être produit au moyen de l'injecteur (20) pour amener le carburant du moteur à combustion interne (10) dans la chambre de combustion (12) dans une zone comprise entre 1 millimètre inclus et 4 millimètres inclus.
